(19) Europäisches Patentamt
European Patent Office
Office européen des brevets

(11) EP 4 286 485 A1

(12) **EUROPEAN PATENT APPLICATION**
published in accordance with Art. 153(4) EPC

(43) Date of publication:
**06.12.2023 Bulletin 2023/49**

(21) Application number: **22787971.5**

(22) Date of filing: **24.03.2022**

(51) International Patent Classification (IPC):
***C09D 17/00*** *(2006.01)* ***B41J 2/01*** *(2006.01)*
***C09D 11/326*** *(2014.01)* ***B41M 5/00*** *(2006.01)*

(52) Cooperative Patent Classification (CPC):
**B41J 2/01; B41M 5/00; C09D 11/326; C09D 17/00**

(86) International application number:
**PCT/JP2022/013798**

(87) International publication number:
**WO 2022/220046 (20.10.2022 Gazette 2022/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.04.2021 JP 2021068931**

(71) Applicant: **DIC CORPORATION**
**Itabashi-ku**
**Tokyo 174-8520 (JP)**

(72) Inventors:
- **TAKAHASHI, Yusuke**
  **Kitaadachi-gun, Saitama 362-8577 (JP)**
- **ICHIKAWA, Ryouta**
  **Kitaadachi-gun, Saitama 362-8577 (JP)**
- **SHIGEMORI, Minoru**
  **Sakura-shi, Chiba 285-8668 (JP)**
- **NIO, Takahiro**
  **Kitaadachi-gun, Saitama 362-8577 (JP)**
- **IMAMURA, Shoji**
  **Sakura-shi, Chiba 285-8668 (JP)**

(74) Representative: **Beckmann, Claus et al**
**Kraus & Weisert**
**Patentanwälte PartGmbB**
**Thomas-Wimmer-Ring 15**
**80539 München (DE)**

(54) **AQUEOUS PIGMENT DISPERSION, INKJET PRINTING INK AND METHOD FOR PRODUCING PRINTED MATERIAL**

(57) An object of the present invention is to provide an aqueous pigment dispersion that maintains excellent storage stability and can be used to produce an inkjet ink that can form clear printed images with less color unevenness and the like and with excellent water resistance. The present invention provides an aqueous pigment dispersion containing a pigment (A), a pigment dispersing resin (B) having a structure (X) represented by general formula (I) below and an anionic group, and an aqueous medium (C). The pigment dispersing resin (B) contains 0.2 to 1.5 mmol/g of the anionic group in the total amount of the pigment dispersing resin (B).



Processed by Luminess, 75001 PARIS (FR)

## Description

### Technical Field

The present invention relates to an aqueous pigment dispersion that can be used, for example, to produce inks including inkjet inks.

### Background Art

Inkjet recording is a recording method in which ink droplets are ejected from extremely fine nozzles directly onto a recording material and attached thereto to form characters and images. This method is advantageous in that devices used produce less noise and are easy to handle. Moreover, with this method, color printing of a printed material is easy. The inkjet recording method is therefore used not only in output machines in offices and homes but also in industrial applications.

Inks used in the above inkjet recording method are required to cause less sedimentation of pigments and the like over time and have excellent storage stability in order to prevent clogging of ink ejection nozzles.

As an inkjet ink with excellent storage stability, for example, a water-based ink is known, which is formed by dispersing a pigment with a water-soluble polymer having an anionic group and a water-insoluble polymer having an anionic group and then cross-linking the polymers with a specific amount of cross-linking agent (see, for example, PTL 1).

On the other hand, while inkjet inks start to be used in industrial applications as described above, new and unprecedented performance of inkjet inks has been demanded. For example, the surface of cardboard is now often printed in white and various prints are applied to the surface in order to impart a good appearance. When the printing is performed by the inkjet printing method, inkjet inks are required to have a property of forming clear printed images. However, conventional inkjet inks are less likely to spread over a surface of a layer less absorbing a solvent, such as white print described above, and tend to be repelled. As a result, conventional inks may cause print defects such as density unevenness (mottling) in solid print areas and granular unevenness (graininess) due to dots combined.

The print defects in printed images can be suppressed to some extent, for example, by adjusting the viscosity, surface tension, and the like of ink. However, the ink having surface tension and the like adjusted to the extent that can suppress print defects to some extent sometimes involves increase in viscosity or increase in particle size of pigments contained in the ink, for example, when stored at room temperature or in a high temperature environment.

As described above, there is a trade-off between improvement in print defects in printed images and storage stability, and the development of inkjet inks that achieve both has been demanded.

An aqueous ink for inkjet recording, formed by dispersing a pigment with a water-soluble polymer (x) having an anionic group and a water-insoluble polymer (y) having an anionic group, and then cross-linking the polymers by a cross-linking agent having a functional group that can react with the anionic groups, in which the amount of the cross-linking agent per gram of the polymers is 0.8 to 3.0 mmol equivalent/g, and the amount of the anionic groups per gram of the polymers after cross-linking is 1.5 to 3.0 mmol/g. An aqueous ink for inkjet recording, formed by dispersing a pigment with a water-soluble polymer (x) having an anionic group and a water-insoluble polymer (y) having an anionic group, and then cross-linking the polymers by a cross-linking agent having a functional group that can react with the anionic groups, in which the amount of the cross-linking agent per gram of the polymers is 0.8 to 3.0 mmol equivalent/g, and the amount of the anionic groups per gram of the polymers after cross-linking is 1.5 to 3.0 mmol/g. An aqueous ink for inkjet recording, formed by dispersing a pigment with a water-soluble polymer (x) having an anionic group and a water-insoluble polymer (y) having an anionic group, and then cross-linking the polymers by a cross-linking agent having a functional group that can react with the anionic groups, in which the amount of the cross-linking agent per gram of the polymers is 0.8 to 3.0 mmol equivalent/g, and the amount of the anionic groups per gram of the polymers after cross-linking is 1.5 to 3.0 mmol/g.

### Citation List

#### Patent Literature

PTL 1: Japanese Unexamined Patent Application Publication No. 2011-137102

### Summary of Invention

#### Technical Problem

An object of the present invention is to provide an aqueous pigment dispersion that maintains excellent storage

stability and can be used to produce inkjet inks that can form clear printed images with less color unevenness and the like.

Solution to Problem

The inventors of the present invention have achieved the object by an aqueous pigment dispersion containing a pigment (A), a pigment dispersing resin (B) having a structure (X) represented by general formula (I) below and an anionic group, and an aqueous medium (C), in which the pigment dispersing resin (B) contains 0.2 to 1.5 mmol/g of the anionic group in a total amount of the pigment dispersing resin (B), and an inkjet ink including the same.

[Chem. 1]

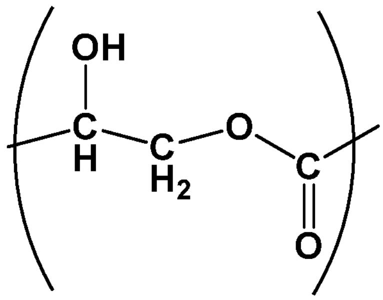

(I)

Advantageous Effects of Invention

The aqueous pigment dispersion of the present invention can provide an inkjet ink that maintains excellent storage stability and can form clear printed images with less color unevenness and the like, and a printed material.

Description of Embodiments

An aqueous pigment dispersion of the present invention contains a pigment (A), a pigment dispersing resin (B) having a structure (X) represented by general formula (I) below and an anionic group, and an aqueous medium (C), in which the pigment dispersing resin (B) contains 0.25 to 1.5 mmol/g of the anionic group in a total amount of the pigment dispersing resin (B).

[Chem. 2]

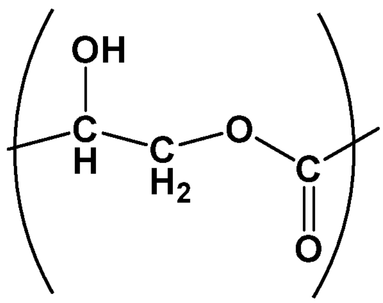

(I)

First of all, the pigment (A) used in the aqueous pigment dispersion of the present invention will be described.

For example, organic pigments and inorganic pigments commonly used in aqueous gravure inks or aqueous inkjet inks can be used as the pigment (A).

The pigment (A) may include one or both of an organic pigment and an inorganic pigment. Either an acid-untreated pigment or an acid-treated pigment can be used as the pigment (A).

Examples of the inorganic pigment that can be used include iron oxide and carbon black produced by a method such as a contact method, a furnace method, or a thermal method.

Examples of the organic pigment that can be used include azo pigments (azo lakes, insoluble azo pigments, condensed azo pigments, chelate azo pigments, etc.), polycyclic pigments (e.g., phthalocyanine pigments, perylene pigments, perinone pigments, anthraquinone pigments, quinacridone pigments, dioxazine pigments, thioindigo pigments, isoindolinone pigments, quinophthalone pigments, etc.), lake pigments (e.g., basic dye-type chelates, acid dye-type chelates, etc.), nitro pigments, nitroso pigments, and aniline black.

Examples of the pigment that can be used in black ink (black pigment) include C.I. Pigment Black 1, 6, 7, 8,

10, 26, 27, and 28. Among these, C.I. Pigment Black 7 is preferably used. Specific examples of the black pigment include No. 2300, No. 2200B, No. 900, No. 960, No. 980, No. 33, No. 40, No. 45, No. 45L, No. 52, HCF88, MA7, MA8, MA100, and the like from Mitsubishi Chemical Corporation; Raven 5750, Raven 5250, Raven 5000, Raven 3500, Raven 1255, Raven 700, and the like from Columbian Chemicals Company; Regal 400R, Regal 330R, Regal 660R, Mogul L, Mogul 700, Monarch 800, Monarch 880 Monarch 900, Monarch 1000, Monarch 1100, Monarch 1300, Monarch 1400, and the like from Cabot Corporation; and Color Black FW1, Color Black FW2, Color Black FW2V, Color Black FW18, Color Black FW200, Color Black S150, Color Black S160, Color Black S170, Printex 35, Printex U, Printex V, Printex 1400U, Special Black 6, Special Black 5, Special Black 4, Special Black 4A, NIPEX 150, NIPEX 160, NIPEX 170, NIPEX 180, and the like from Degussa AG.

Specific examples of the pigment that can be used in yellow ink (yellow pigment) include C.I. Pigment Yellow 1, 2, 12, 13, 14, 16, 17, 73, 74, 75, 83, 93, 95, 97, 98, 109, 110, 114, 120, 128, 129, 138, 150, 151, 154, 155, 174, 180, and 185.

Specific examples of the pigment that can be used in magenta ink (magenta pigment) include C.I. Pigment Red 5, 7, 12, 48 (Ca), 48 (Mn), 57 (Ca), 57: 1, 112, 122, 123, 146, 176, 184, 185, 202, 209, 269, and 282; and C.I. Pigment Violet 19.

Specific examples of the pigment that can be used in cyan ink (cyan pigment) include C.I. Pigment Blue 1, 2, 3, 15, 15: 3, 15: 4, 15: 6, 16, 22, 60, 63, and 66. Among these, C.I. Pigment Blue 15: 3 is preferably used.

Specific examples of the pigment that can be used in white ink (white pigment) include sulfates and carbonates of alkaline earth metals, silicas such as fine silica powder and synthetic silicates, calcium silicate, alumina, alumina hydrate, titanium dioxide, zinc oxide, talc, and clay.

The pigment (A) is preferably used in the range of 10% by mass to 25% by mass in the total amount of the aqueous pigment dispersion, and preferably used in the range of 15% by mass to 20% by mass to obtain an aqueous pigment dispersion that can suppress agglomeration and the like over time and has excellent storage stability.

The pigment dispersing resin (B) used in the aqueous pigment dispersion of the present invention will now be described.

The pigment dispersing resin (B) used in the present invention has a structure (X) represented by general formula (I) below and an anionic group, in which the pigment dispersing resin (B) contains the anionic group in the range of 0.25 to 1.5 mmol/g in the total amount of the pigment dispersing resin (B).

[Chem. 3]

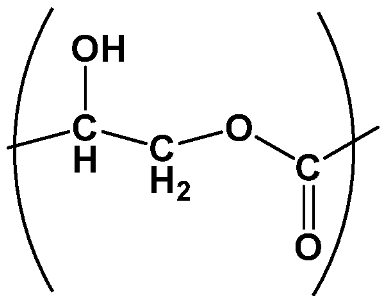

(I)

The pigment dispersing resin (B), having the structure (X), forms a network structure on a surface of the pigment (A), and as a result, excellent storage stability can be imparted to the aqueous pigment dispersion of the present invention containing the pigment dispersing resin (B) and to an ink including the same.

An example of the structure (X) of the pigment dispersing resin (B) is a structure formed by a reaction of a carboxyl group and an epoxy group.

As the pigment dispersing resin (B) having the structure (X), for example, a reaction product of a compound (B1) having an anionic group including a carboxyl group and a compound (B2) having two or more epoxy groups can be used.

As the pigment dispersing resin (B), for example, a reaction product obtained by reacting the compound (B1) with the compound (B2) in advance can be used. It is preferable that the pigment dispersing resin (B) be formed, for example, by producing an aqueous pigment dispersion containing the pigment (A), the compound (B1), the aqueous medium (C), and the like, and then blending the aqueous pigment dispersion with the compound (B2) and reacting the carboxyl group of the compound (B1) with the epoxy group of the compound (B2).

The degree of the reaction between the carboxyl group of the compound (B1) and the epoxy group of the compound (B2) can be evaluated by a cross-linking ratio. As used herein, the cross-linking ratio refers to a value calculated by 100 $\times$ [moles of the epoxy group in the compound (B2)] / [moles of the carboxyl group in the compound (B1)]. For

the aqueous pigment dispersion of the present invention, it is preferable to use the pigment dispersing resin (B) with a cross-linking ratio in the range of 20% to 90%, it is more preferable to use the pigment dispersing resin (B) in the range of 30% to 90%, and it is particularly preferable to use the pigment dispersing resin (B) in the range of 45% to 85% to achieve the effect of improving storage stability while maintaining dispersibility by the neutralized carboxyl group.

The pigment dispersing resin (B) having an anionic group in the range of 0.2 to 1.5 mmol/g in the total amount of the pigment dispersing resin (B) is used. The pigment dispersing resin (B) having an anionic group in the above range can be used to obtain an aqueous pigment dispersion having excellent storage stability and an ink including the same. It is more preferable to use the anionic group in the range of 0.25 to 1.2 mmol/g in the total amount of the pigment dispersing resin (B) to further improve the storage stability of the aqueous pigment dispersion and the ink.

When a reaction product of the compound (B1) and the compound (B2) is used as the pigment dispersing resin (B), the anionic group of the compound (B1) partially reacts with the epoxy group of the compound (B2) and is consumed. Therefore, the amount of the anionic group in the total amount of the pigment dispersing resin (B) refers to the amount of the anionic group remaining in the reaction product of the compound (B1) and the compound (B2).

Examples of the compound (B1) include acrylic resins such as acrylic acid-acrylic acid ester copolymers, styrene-acrylic resins such as styrene-acrylic acid copolymers, styrene-methacrylic acid copolymers, styrene-methacrylic acid-acrylic ester copolymers, styrene-$\alpha$-methylstyrene-acrylic acid copolymers, and styrene-$\alpha$-methylstyrene-acrylic acid-acrylic acid ester copolymers, resins of styrene-maleic acid copolymers, styrene-maleic anhydride copolymers, and vinylnaphthalene-acrylic acid copolymers, and salts of the above resins. For example, as the compound (B1), ACRYDIC series from DIC Corporation, HIROS-X series from Seiko PMC Corporation, and the compounds listed as the polymer (G) in WO2018/190139 can also be used as the compound (B1).

Among those, it is preferable to use styrene-acrylic acid copolymers and styrene-methacrylic acid copolymers as the compound (B1), because if so, the pigment (A) can be stably dispersed in the aqueous medium (C).

It is preferable to use the compound (B1) with an acid value of 250 mg KOH/g or less. It is preferable to use the compound (B1) with an acid value of 70 mg KOH/g to 190 mg KOH/g, and it is more preferable to use the compound (B1) with an acid value of 100 mg KOH/g to 190 mg KOH/g to prevent agglomeration and sedimentation of the pigment over time and obtain an aqueous pigment dispersion and an ink with excellent storage stability.

The compound (B1) is preferably used in the range of 20% by mass to 40% by mass in the total amount of the pigment (A), and more preferably used in the range of 30% by mass to 40% by mass.

It is preferable to use the compound (B1) in which the anionic group is partially neutralized by a neutralizer.

It is preferable to use an alkali metal hydroxide as the neutralizer to further increase the dispersion stability immediately after production of the aqueous pigment dispersion of the present invention and the storage stability.

Examples of the alkali metal hydroxide include lithium hydroxide, sodium hydroxide, potassium hydroxide, and cesium hydroxide, and sodium hydroxide and potassium hydroxide are preferred.

It is preferable to use the neutralizer in a range in which a neutralization ratio calculated by the formula below exceeds 100% to prevent sedimentation, agglomeration, and the like of the pigment (A) over time and to obtain an aqueous pigment dispersion with excellent storage stability. The neutralization ratio refers to a value calculated based on the formula [100 $\times$ (molar equivalent of the hydroxyl group of the alkali metal hydroxide/molar equivalent of the anionic group of the compound (B1))].

As the compound (B2), a compound having two or more epoxy groups can be used. It is more preferable to use the compound (B2) having 2 to 4 epoxy groups to further improve the storage stability of the aqueous pigment dispersion and the ink.

Examples of the compound (B2) include polyglycidyl ethers such as ethylene glycol diglycidyl ether, polyethylene glycol diglycidyl ether, polypropylene glycol diglycidyl ether, glycerol triglycidyl ether, glycerol polyglycidyl ether, polyglycerol polyglycidyl ether, trimethylolpropane polyglycidyl ether, sorbitol polyglycidyl ether, pentaerythritol polyglycidyl ether, resorcinol diglycidyl ether, and neopentyl glycol diglycidyl ether.

Among others, it is preferable to use the compound (B2) having an epoxy group and an oxyethylene structure to further improve the storage stability of the aqueous pigment dispersion. Specifically, it is preferable to use polyethylene glycol polyglycidyl ether and trimethylolpropane polyglycidyl ether as the compound (B2).

The compound (B2) is preferably used in the range of 3.2 mmol/g or less in the total amount of the compound (B1) to obtain an aqueous pigment dispersion with even more excellent storage stability, more preferably used in the range of 2.7 mmol/g or less, and more preferably used in the range of 0.6 mmol/g or more and 2.4 mmol/g or less.

It is preferable to use the compound (B2) having a molecular weight in the range of 100 to 1000, and it is particularly preferable to use the compound (B2) having a molecular weight in the range of 150 to 750 to obtain an aqueous pigment dispersion and an ink with even more excellent storage stability.

The aqueous medium (C) of the present invention will now be described.

The aqueous medium (C) is, for example, water. Specifically, pure water or ultrapure water, such as ion-exchange water, ultra-filtrated water, reverse osmosis water, and distilled water can be used.

The aqueous medium (C) is preferably used in the range of 35% by mass to 75% by mass in the total amount

of the aqueous pigment dispersion, and more preferably used in the range of 45% by mass to 65% by mass in the total amount of the aqueous pigment dispersion.

The aqueous pigment dispersion of the present invention may contain a preservative, a viscosity adjuster, a pH adjuster, a chelating agent, a plasticizer, an antioxidant, a UV absorber, and the like, if necessary. The chelating agent can reduce the amount of pigment-derived metal ions included in the aqueous pigment dispersion.

A method for producing the aqueous pigment dispersion of the present invention will now be described.

The aqueous pigment dispersion of the present invention can be produced, for example, by a method including: step 1 of blending the pigment (A), the compound (B1), and the aqueous medium (C) to produce a dispersion in which the pigment (A) is dispersed in the aqueous medium (C) by the compound (B1); and step 2 of blending the dispersion obtained in step 1 with the compound (B2) to react an anionic group such as a carboxyl group of the compound (B1) included in the dispersion with a functional group such as an epoxy group of the compound (B2) to form the pigment dispersing resin (B).

Step 1 is a step of processing a mixture of the pigment (A), the compound (B1), and the aqueous medium (C), for example, using a disperser.

As the disperser, for example, a mixing disperser with high-speed stirrer blades such as intensive mixer (available from Nippon Eirich Co., Ltd.) and Butterfly Mixer (INOUE MFG., INC.), or a media-type wet disperser such as SC Mill (NIPPON COKE & ENGINEERING CO., LTD.) and Nano Mill (ASADA IRON WORKS CO., LTD.) can be used.

Among those, it is preferable to use the mixing disperser with high-speed stirrer blades as the disperser to prevent deterioration of inkjet ejection of the ink due to beads used in the media-type wet disperser. Furthermore, compared to the media-type wet disperser, the mixing disperser with high-speed stirrer blades allows the temperature of the content in the disperser to be increased to near 100°C and consequently, can increase the adsorbability of the compound (B1) on the pigment (A).

On the other hand, when the media-type wet disperser is used, step 1 may include: step 1-1 of blending the pigment (A), the compound (B1), and the aqueous medium (C) and performing preliminary dispersion using a stirrer or the like to produce a mixture in which the pigment (A) and the like contains the aqueous medium (C); and step 1-2 of processing the mixture obtained in step 1-1 with the above media-type wet disperser. With this step, the dispersibility of the pigment (A) and the like contained in the aqueous pigment dispersion can be checked during the step.

Neutralization of the compound (B1) is preferably performed during step 1 or after completion of step 1. Specifically, the neutralization can be performed by supplying and blending the above neutralizer to the mixture during step 1 or to the dispersion obtained after the completion of step 1.

It is also preferable to subject the dispersion obtained in step 1 to centrifugal separation, if necessary, before step 2 to remove coarse particles and reduce the amount of sediment contained in the dispersion obtained in step 1, the aqueous pigment dispersion, or the ink.

Step 2 will now be described.

Step 2 is a step of reacting an anionic group such as a carboxyl group of the compound (B1) with a functional group such as an epoxy group of the compound (B2) to form the pigment dispersing resin (B) coating or adsorbed on the surface of the pigment (A). The reaction is preferably performed in the range of 60 to 70°C to obtain an aqueous pigment dispersion with even more excellent storage stability.

Although it is preferable that the compound (B2) be supplied to the dispersion obtained after completion of step 1, the compound (B2) may be supplied to the mixture of the pigment (A), the compound (B1), and the aqueous medium (C) during step 1.

It is preferable to subject the aqueous pigment dispersion obtained through steps 1 and 2 to centrifugal separation, if necessary, to remove coarse particles and reduce the amount of sediment contained in the dispersion obtained in step 1, the aqueous pigment dispersion, or the ink.

The aqueous pigment dispersion obtained by the method described above can be used to produce an ink such as an inkjet ink, as described later. However, the aqueous pigment dispersion obtained by the method described above tends to have a slightly higher pH, so if the pH deviates from the pH expected for inks, it is preferable to adjust the pH of the aqueous pigment dispersion to a lower value in advance to increase the degree of freedom in ink design. An example of the method of adjusting the pH of the aqueous pigment dispersion is to treat the aqueous pigment dispersion with an ion exchange resin. Specifically, for example, the method includes blending a weakly acidic cation-exchange resin, such as Amberlite IRC76 from ORGANO CORPORATION, with the aqueous pigment dispersion and then removing the cation-exchange resin.

The aqueous pigment dispersion of the present invention obtained by the above method can be used, for example, to produce inks. Among others, the aqueous pigment dispersion can be used to produce an inkjet ink.

The inkjet ink can be produced, for example, by supplying and blending an aqueous medium, a binder, a surfactant, and the like, if necessary, to the aqueous pigment dispersion.

In blending the aqueous pigment dispersion with an aqueous medium, a binder, a surfactant, and the like, if necessary, for example, a disperser such as a beads mill, an ultrasonic homogenizer, a high-pressure homogenizer, a

paint shaker, a ball mill, a roll mill, a sand mill, a sand grinder, Dyno-Mill, DISPERMAT, SC mill, or Nano-Mizer can be used.

The inkjet ink may contain other additives such as a binder, a surfactant, a wax, a wetting agent (drying retarder), a penetrating agent, a preservative, a viscosity adjuster, a pH adjuster, a chelating agent, a plasticizer, an antioxidant, and a UV absorber, if necessary.

For example, an acid-modified polypropylene resin can be used as the binder. As the acid-modified polypropylene resin, a resin obtained by modifying polypropylene with one or two or more acid compounds can be used, and a resin having a polypropylene-derived backbone (polypropylene backbone) and an acid compound-derived functional group can be used. An inkjet ink containing the acid-modified polypropylene resin can suppress occurrence of mottling and white streaks on a printed material even when printed on a recording medium that does not absorb or less absorbs a solvent in the ink.

A commercially available product can be used as the acid-modified polypropylene resin. Examples of preferred commercially available products include AUROREN (registered trademark) AE-301 and AE-502 from Nippon Paper Industries Co., Ltd. As the oxidized polyethylene wax, for example, polyethylene wax subjected to oxidation can be used. Specifically, the one having a polyethylene-derived backbone (polyethylene backbone) can be used.

Examples of the surfactant that can be used include anionic surfactants, nonionic surfactants, cationic surfactants, and amphoteric surfactants.

As the surfactant, it is preferable to use one or more selected from the group consisting of anionic surfactants and nonionic surfactants in terms of easily suppressing the occurrence of streaky print detects.

Examples of the anionic surfactants include alkyl benzene sulfonates, alkyl phenyl sulfonates, alkyl naphthalene sulfonates, higher fatty acid salts, sulfates of higher fatty acid esters, sulfonates of higher fatty acid esters, sulfates and sulfonates of higher alcohol ethers, higher alkyl sulfosuccinates, polyoxyethylene alkyl ether carboxylates, polyoxyethylene alkyl ether sulfates, alkyl phosphates, and polyoxyethylene alkyl ether phosphates. Specific examples of these include dodecyl benzene sulfonates, isopropylnaphthalene sulfonates, monobutylphenylphenol monosulfonates, monobutylbiphenyl sulfonates, and dibutylphenylphenol disulfonates.

Examples of the nonionic surfactants include polyoxyethylene alkyl ethers, polyoxyethylene alkyl phenyl ethers, polyoxyethylene fatty acid esters, sorbitan fatty acid esters, polyoxyethylene sorbitan fatty acid esters, polyoxyethylene sorbitol fatty acid esters, glycerol fatty acid esters, polyoxyethylene glycerol fatty acid esters, polyglycerol fatty acid esters, sucrose fatty acid esters, polyoxyethylene alkylamines, polyoxyethylene fatty acid amides, fatty acid alkylolamides, alkyl alkanolamides, acetylene glycols, oxyethylene adducts of acetylene glycols, and polyethylene glycol-polypropylene glycol block copolymers. Among these, one or more selected from the group consisting of polyoxyethylene nonylphenyl ethers, polyoxyethylene octylphenyl ethers, polyoxyethylene dodecylphenyl ethers, polyoxyethylene alkyl ethers, polyoxyethylene fatty acid esters, sorbitan fatty acid esters, polyoxyethylene sorbitan fatty acid esters, fatty acid alkylolamides, acetylene glycols, oxyethylene adducts of acetylene glycols, and polyethylene glycol-polypropylene glycol block copolymers are preferred.

As the nonionic surfactant, the inkjet ink preferably contains an acetylene-based surfactant in terms of easily suppressing the occurrence of streaky print detects. The acetylene-based surfactant is a surfactant having an acetylene structure in the molecule. The acetylene-based surfactant preferably includes one or more selected from the group consisting of acetylene glycols and oxyethylene adducts of acetylene glycols in terms of easily suppressing the occurrence of streaky print defects.

The amount of the acetylene-based surfactant is preferably 80 to 100% by mass, more preferably 85 to 99.9% by mass, even more preferably 90 to 99.5% by mass, and particularly preferably 95 to 99.3% by mass of the total amount of the surfactant, in terms of easily suppressing the occurrence of streaky print detects.

Examples of other surfactants that can be used include silicone surfactants such as polysiloxane oxyethylene adducts; fluorosurfactants such as perfluoroalkyl carboxylates, perfluoroalkyl sulfonates, and oxyethylene perfluoroalkyl ethers; and biosurfactants such as spiculisporic acid, rhamnolipid, and lysolecithin.

The amount of the surfactant is preferably 0.1 to 2% by mass, more preferably 0.5 to 2% by mass, and even more preferably 0.8 to 1.6% by mass in the total amount of the inkjet ink.

The ejected droplets of the inkjet ink containing a surfactant in such an amount have high wettability on a surface of a material to be printed and sufficiently spread over the material to be printed, thereby easily achieving the effect of preventing the occurrence of streaky print detects.

The use of a surfactant facilitates prevention of the occurrence of streaky print defects, for example, because the inkjet ink ejected from the ejection holes of inkjet heads spreads on a surface well after landing on a material to be printed. Furthermore, the use of a surfactant can reduce the surface tension of the inkjet ink, for example, thereby easily improving the leveling properties of the inkjet ink.

For example, oxidized polyethylene wax can be used as the wax.

An inkjet ink containing the oxidized polyethylene wax can produce a printed material with excellent image fastness.

As the oxidized polyethylene wax, it is preferable to use an oxidized polyethylene wax in a dissolved or dispersed

state in a solvent to obtain a printed material with excellent image fastness.

A commercially available product can be used as the oxidized polyethylene wax. Examples of preferred commercially available products include AQUACER 515 and AQUACER 1547 available from BYK-Chemie GmbH.

The wetting agent can be used for preventing the inkjet ink from drying at the ejection nozzles of inkjet heads. It is preferable to use a wetting agent that is miscible with water and can prevent clogging of ejection holes of inkjet heads. Examples include ethylene glycol, diethylene glycol, triethylene glycol, polyethylene glycol with a molecular weight of 2000 or less, propylene glycol, dipropylene glycol, tripropylene glycol, isopropylene glycol, isobutylene glycol, 1,4-butanediol, 1,3-butanediol, 1,5-pentanediol, 1,6-hexanediol, meso-erythritol, pentaerythritol, and glycerol.

A solid wetting agent can also be used as the wetting agent. Examples of such a wetting agent include urea and urea derivatives. Examples of the urea derivatives include ethylene urea, propylene urea, diethyl urea, thiourea, N,N-dimethyl urea, hydroxyethyl urea, hydroxybutyl urea, ethylenethiourea, and diethylthiourea. These can be used singly or in combination of two or more. Preferably, at least one selected from the group consisting of urea, ethylene urea, and 2-hydroxyethyl urea is used in terms of easily producing a printed material with excellent setting properties.

The amount of the wetting agent is 3 to 50% by mass in the total amount of the inkjet ink to achieve both of ease of drying on a recording medium and prevention of sticking of the inkjet ink inside the inkjet heads.

Examples of the penetrating agent include lower alcohols such as ethanol and isopropyl alcohol; and glycol monoethers such as ethylene glycol monomethyl ether, ethylene glycol monoethyl ether, ethylene glycol monopropyl ether, ethylene glycol monobutyl ether, diethylene glycol monomethyl butyl ether, diethylene glycol monoethyl ether, diethylene glycol monopropyl ether, diethylene glycol monobutyl ether, triethylene glycol monomethyl ether, triethylene glycol monoethyl ether, triethylene glycol monopropyl ether, triethylene glycol monobutyl ether, propylene glycol monomethyl ether, propylene glycol monoethyl ether, propylene glycol monopropyl ether, propylene glycol monobutyl ether, dipropylene glycol monomethyl ether, dipropylene glycol monoethyl ether, dipropylene glycol monopropyl ether, dipropylene glycol monobutyl ether, tripropylene glycol monomethyl ether, tripropylene glycol monoethyl ether, tripropylene glycol monopropyl ether, and tripropylene glycol monobutyl ether.

In the inkjet ink obtained by the above method, the pigment (A) is preferably used in the range of 1% by mass to 15% by mass in the total amount of the inkjet ink, and preferably used in the range of 2% by mass to 10% by mass to achieve high printing density of a printed material, produce less streaks on a printed material, and obtain a printed material with excellent image fastness and excellent dispersion stability.

The pH of the inkjet ink is preferably 7.0 or higher, more preferably 7.5 or higher, and even more preferably 8.0 or higher in order to improve storage stability and ejection stability of the ink, and to improve wettability, printing density, and abrasion resistance in printing on a less-ink-absorbent or non-ink-absorbent recording medium. The upper limit of pH of the aqueous ink composition is preferably 11.0 or lower, more preferably 10.5 or lower, and even more preferably 10.0 or lower, in order to suppress deterioration of members of an ink-applying or ejecting device (e.g., ink ejection holes, ink channels, etc.) and to reduce the effect of ink adhering to the skin. In these respects, the pH of the inkjet ink is preferably 7.0 to 11.0. The above pH is the pH at 25°C.

The viscosity of the inkjet ink is preferably 2 mPa·s or higher and lower than 10 mPa·s at 32°C. When the inkjet ink having a viscosity within this range is used in the inkjet recording method, the displacement of ink droplets landing on a recording medium due to flight deflection is alleviated in appearance, and the occurrence of streaks on a printed material tends to be prevented effectively. The inkjet ink having a viscosity in this range tends to be excellent in storage stability and ejection stability in the inkjet recording method. The viscosity of the inkjet ink at 32°C is preferably 3 mPa·s or higher and more preferably 4 mPa·s or higher. The viscosity of the aqueous ink composition at 32°C is preferably 8 mPa·s or lower and more preferably 7 mPa·s or lower. The viscosity is the value measured, for example, using a cone-and-plate rotational viscometer equivalent to an E-type viscometer, under the following conditions.

Measuring device: TVE-25 viscometer (TVE-25 L available from Toki Sangyo Co., Ltd.)
Standard liquid for calibration: JS20
Measuring temperature: 32°C
Rotation speed: 10 to 100 rpm
Injection volume: 1200 μL

The surface tension of the inkjet ink is, for example, 20 to 40 mN/m at 25°C. When the aqueous ink composition having a surface tension within this range is used in the inkjet recording method, the wettability of the ejected droplets on the surface of a recording medium tends to be high, and the droplets tend to sufficiently spread after landing. The surface tension of the inkjet ink at 25°C is preferably 25 mN/m or higher and more preferably 27 mN/m or higher. The surface tension of the aqueous ink composition at 25°C is preferably 35 mN/m or lower and more preferably 32 mN/m or lower.

A printed material obtained using the inkjet ink of the present invention has, for example, a recording medium

and a coating of the inkjet ink printed on a surface of the recording medium. The ink coating formed on a surface of the recording medium is, for example, a dried product of the inkjet ink and contains solid contents in the inkjet ink (for example, the pigment (A) and the pigment dispersant resin (B)).

The recording medium is, for example, a less-ink-absorbent or non-ink-absorbent recording medium. This printed material has sufficient image fastness even when the recording medium is the less-ink-absorbent or non-ink-absorbent recording medium described above.

The printed material is produced, for example, by performing printing with the inkjet ink on a surface of a recording medium by the inkjet recording method. Specifically, the printed material can be produced by ejecting the inkjet ink and performing printing on a recording medium by the inkjet recording method in which the distance from a surface (x) having ink ejection holes of an inkjet head to a position (y) where a normal to the surface (x) intersects the recording medium is 1 mm or more.

[Examples]

The invention will be described in more detail below with examples, but the invention is not limited to these examples.

<Preparation of Aqueous Pigment Dispersion>

(Comparative Example 1)

In a 1.0 L intensive mixer (from Nippon Eirich Co., Ltd.), 150 g of the black pigment (carbon black "#960" (product name) from Mitsubishi Chemical Corporation), 60 g of a styrene-acrylic acid copolymer (weight average molecular weight: 18,000, glass transition temperature: 52°C, acid value: 110 mg KOH/g) as a pigment dispersant resin X, 30 g of propylene glycol, and 15.5 g of a 34%-by-mass potassium hydroxide solution were fed, and a mixture was formed by gradually adding ion-exchange water and then mixed for 60 minutes at a rotor peripheral speed of 2.94 m/s and a pan peripheral speed of 1 m/s. Subsequently, 266 g of warm ion-exchange water was gradually added to the mixture in the vessel of the intensive mixer with continuous stirring, and then 30 g of propylene glycol, 0.75 g of ACTICIDE B20, and a maximum of 197 g of ion-exchange water were added so that the pigment concentration became 20% by mass, yielding an aqueous pigment dispersion 1K with a pigment concentration of 20% by mass.

(Example 1)

To 500 g of the aqueous pigment dispersion obtained by diluting the aqueous pigment dispersion 1K obtained in Comparative Example 1 with ion-exchange water so that the solid content concentration was 20% by mass, 4.61 g of a cross-linking agent (product name: DENACOL EX-512, epoxy equivalent: 168, dissolution rate of 10 g of a cross-linking agent in 90 g of ion-exchange water is approximately 100% by mass (25°C), from Nagase ChemteX Corporation) was added, and the mixture was stirred at 60 to 70°C for 5 hours. After stirring, the mixture was cooled to yield an aqueous pigment dispersion 11K (pigment concentration: 13.9% by mass).

(Comparative Example 2)

"FASTOGEN BLUE SBG-SD" (product name) manufactured by DIC Corporation was prepared as a cyan pigment. An aqueous pigment dispersion 2C (pigment concentration: 20% by mass) was prepared by the same process as in Comparative Example 1, except that the cyan pigment was used instead of the black pigment, the amount of the pigment dispersant resin X used was 45 g, the amount of a 34%-by-mass potassium hydroxide solution used was 11.6 g, and 60 g of propylene glycol was initially fed and was not added after the mixture was formed.

(Example 2)

To 500 g of an aqueous pigment dispersion obtained by diluting the aqueous pigment dispersion 2C obtained in Comparative Example 2 with ion-exchange water so that the solid content concentration was 20% by mass, 3.73 g of a cross-linking agent (product name: DENACOL EX-512, epoxy equivalent: 168, dissolution rate of 10 g of a cross-linking agent in 90 g of ion-exchange water is approximately 100% by mass (25°C), from Nagase ChemteX Corporation) was added, and the mixture was stirred at 60 to 70°C for 5 hours. After stirring, the mixture was cooled to yield an aqueous pigment dispersion 12C (pigment concentration: 15% by mass).

(Comparative Example 3)

"FASTOGEN SUPER MAGENTA RY" (product name) manufactured by DIC Corporation was prepared as a magenta pigment. An aqueous pigment dispersion 3M (pigment concentration: 20% by mass) was prepared in the same way as in Comparative Example 2, except that the magenta pigment was used instead of the cyan pigment.

(Example 3)

To 500 g of an aqueous pigment dispersion obtained by diluting the aqueous pigment dispersion 3M obtained in Comparative Example 3 with ion-exchange water so that the solid content concentration was 20% by mass, 6.12 g of a cross-linking agent (product name: DENACOL EX-512, epoxy equivalent: 168, dissolution rate of 10 g of a cross-linking agent in 90 g of ion-exchange water is approximately 100% by mass (25°C), from Nagase ChemteX Corporation) was added, and the mixture was stirred at 60 to 70°C for 5 hours. After stirring, the mixture was cooled to yield an aqueous pigment dispersion 13M (pigment concentration: 14.9% by mass).

(Comparative Example 4)

"Ink Jet Yellow 4GC" (product name) from Clariant AG was prepared as a yellow pigment, and an aqueous pigment dispersion 4Y (pigment concentration: 20% by mass) was prepared in the same way as in Comparative Example 2, except that the yellow pigment was used instead of the cyan pigment.

(Example 4)

To 500 g of an aqueous pigment dispersion obtained by diluting the aqueous pigment dispersion 4Y obtained in Comparative Example 4 with ion-exchange water so that the solid content concentration was 20% by mass, 3.73 g of a cross-linking agent (product name: DENACOL EX-512, epoxy equivalent: 168, dissolution rate of 10 g of a cross-linking agent in 90 g of ion-exchange water is approximately 100% by mass (25°C), from Nagase ChemteX Corporation) was added, and the mixture was stirred at 60 to 70°C for 5 hours. After stirring, the mixture was cooled to yield an aqueous pigment dispersion 14Y (pigment concentration: 15% by mass).

(Preparation Example 1)

In a reaction vessel of an automatic polymerization reactor (polymerization tester DSL-2AS from TODOROKI SANGYO CO., LTD.) having a stirring device, an instillation device, a temperature sensor, and a reaction vessel equipped with a reflux device with a nitrogen introduction device at the top, 1200 g of isopropyl alcohol was fed, and the inside of the reaction vessel was purged with nitrogen under stirring. While maintaining a nitrogen atmosphere in the reaction vessel, the temperature was raised to 80°C. Subsequently, a mixture of 75 g of 2-hydroxyethyl methacrylate, 260.8 g of methacrylic acid, 400 g of styrene, 234.2 g of benzyl methacrylate, 30 g of glycidyl methacrylate, and 80 g of "PERBUTYL (registered trademark) O" (active ingredient: t-butyl peroxy-2-ethylhexanoate, from NOF CORPORATION) was added dropwise with the installation device over 4 hours. After completion of adding dropwise, the reaction continued at the same temperature for 15 hours. Subsequently, isopropyl alcohol was partially removed under reduced pressure to adjust the nonvolatile content to 42.5% by mass, yielding a pigment dispersant resin Y, which is a solution of (meth) acrylic acid ester resin with an acid value of 165 (weight average molecular weight: 5000, glass transition temperature: 66°C, acid value: 165).

Subsequently, isopropyl alcohol was partially removed under reduced pressure to adjust the nonvolatile content of the pigment dispersant resin Y to 90% by mass, yielding a pigment dispersant resin Z, which is a solution of (meth) acrylic acid ester resin with an acid value of 165 (weight average molecular weight: 5000, glass transition temperature: 66°C, acid value: 165).

(Comparative Example 5)

An aqueous pigment dispersion 5K (pigment concentration: 20% by mass) was prepared by the same process as in Comparative Example 1, except that the pigment dispersant resin Z was used instead of the pigment dispersant resin X, and the amount of a 34%-by-mass potassium hydroxide solution was changed to 23.6 g.

(Example 5)

To 500 g of an aqueous pigment dispersion obtained by diluting the aqueous pigment dispersion 5K obtained

in Comparative Example 5 with ion-exchange water so that the solid content concentration was 20% by mass, 6.91 g of a cross-linking agent (product name: DENACOL EX-512, epoxy equivalent: 168, from Nagase ChemteX Corporation) was added, and the mixture was stirred at 60 to 70°C for 5 hours. After stirring, the mixture was cooled to yield an aqueous pigment dispersion 15K (pigment concentration: 13.6% by mass) .

(Comparative Example 6)

An aqueous pigment dispersion 6C (pigment concentration: 20% by mass) was prepared by the same process as in Comparative Example 2, except that the pigment dispersant resin Z was used instead of the pigment dispersant resin X, and the amount of a 34%-by-mass potassium hydroxide solution was changed to 17.7 g.

(Example 6)

To 500 g of an aqueous pigment dispersion obtained by diluting the aqueous pigment dispersion 6C obtained in Comparative Example 6 with ion-exchange water so that the solid content concentration was 20% by mass, 5.61 g of a cross-linking agent (product name: DENACOL EX-512, epoxy equivalent: 168, dissolution rate of 10 g of a cross-linking agent in 90 g of ion-exchange water is approximately 100% by mass (25°C), from Nagase ChemteX Corporation) was added, and the mixture was stirred at 60 to 70°C for 5 hours. After stirring, the mixture was cooled to yield an aqueous pigment dispersion 16C (pigment concentration: 14.8% by mass).

(Comparative Example 7)

An aqueous pigment dispersion 7M (pigment concentration: 20% by mass) was prepared by the same process as in Comparative Example 3, except that the pigment dispersant resin Z was used instead of the pigment dispersant resin X, and the amount of a 34%-by-mass potassium hydroxide solution was changed to 17.7 g.

(Example 7)

To 500 g of an aqueous pigment dispersion obtained by diluting the aqueous pigment dispersion 7M obtained in Comparative Example 7 with ion-exchange water so that the solid content concentration was 20% by mass, 9.19 g of a cross-linking agent (product name: DENACOL EX-512, epoxy equivalent: 168, dissolution rate of 10 g of a cross-linking agent in 90 g of ion-exchange water is approximately 100% by mass (25°C), from Nagase ChemteX Corporation) was added, and the mixture was stirred at 60 to 70°C for 5 hours. After stirring, the mixture was cooled to yield an aqueous pigment dispersion 17M (pigment concentration: 14.7% by mass).

(Comparative Example 8)

An aqueous pigment dispersion 8Y (pigment concentration: 20% by mass) was prepared by the same process as in Comparative Example 4, except that the pigment dispersant resin Z was used instead of the pigment dispersant resin X, and the amount of a 34%-by-mass potassium hydroxide solution was changed to 17.7 g.

(Example 8)

To 500 g of an aqueous pigment dispersion obtained by diluting the aqueous pigment dispersion 8Y obtained in Comparative Example 8 with ion-exchange water so that the solid content concentration was 20% by mass, 5.61 g of a cross-linking agent (product name: DENACOL EX-512, epoxy equivalent: 168, dissolution rate of 10 g of a cross-linking agent in 90 g of ion-exchange water is approximately 100% by mass (25°C), from Nagase ChemteX Corporation) was added, and the mixture was stirred at 60 to 70°C for 5 hours. After stirring, the mixture was cooled to yield an aqueous pigment dispersion 18Y (pigment concentration: 14.8% by mass).

<Preparation of Wax>

The following oxidized polyethylene waxes were prepared as the wax.

- AQUACER515: available from BYK-Chemie GmbH, product name, high-density oxidized polyethylene wax emulsion, melting point of ($Tm_2$) 135°C
- AQUACER1547: available from BYK-Chemie GmbH, product name, high-density oxidized polyethylene wax emulsion, melting point of ($Tm_2$) 125°C

(Example 9)

Two grams of ion-exchange water, 12.0 g of propylene glycol, 12.0 g of glycerol, 0.2 g of triethanolamine, 0.1 g of TEGO Wet (from Evonik Industries AG, silicone surfactant), 0.1 g of ACTICIDE B20 (from Thor Japan, preservative), and 5.6 g of ethylene urea were blended, and after ethylene urea was dissolved, 1.2 g of propylene glycol and 1.0 g of SURFYNOL 420 (from Evonik Industries AG, acetylene surfactant) were blended (mixture A). Subsequently, 3.3 g of AUROREN (registered trademark) AE-301 (Nippon Paper Industries Co., Ltd., acid-modified polypropylene), 5.0 g of ion-exchange water, 2.9 g of AQUACER 515 (BYK-Chemie GmbH, high-density oxidized polyethylene wax emulsion), and 5.0 g of ion-exchange water were blended in this order (mixture B). An aqueous pigment ink was obtained by blending 40.3 g of the aqueous pigment dispersion 11K obtained in Example 1 with the mixture B, then blending the mixture A, and stirring the mixture after washing the vessel with 9.3 g of ion-exchange water.

(Example 10)

Two grams of ion-exchange water, 12.0 g of propylene glycol, 12.0 g of glycerol, 0.2 g of triethanolamine, 0.1 g of TEGO Wet (from Evonik Industries AG, silicone surfactant), 0.1 g of ACTICIDE B20 (from Thor Japan, preservative), and 5.6 g of ethylene urea were blended, and after ethylene urea was dissolved, 9.1 g of propylene glycol and 1.0 g of SURFYNOL 420 (from Evonik Industries AG, acetylene surfactant) were blended (mixture A). Subsequently, 3.3 g of AUROREN (registered trademark) AE-301 (Nippon Paper Industries Co., Ltd., acid-modified polypropylene), 5.0 g of ion-exchange water, 2.9 g of AQUACER 515 (BYK-Chemie GmbH, high-density oxidized polyethylene wax emulsion), and 5.0 g of ion-exchange water were blended in this order (mixture B). An aqueous pigment ink was obtained by blending 28.7 g of the aqueous pigment dispersion 12C obtained in Example 2 with the mixture B, then blending the mixture A, and stirring the mixture after washing the vessel with 13.0 g of ion-exchange water.

(Example 11)

Two grams of ion-exchange water, 12.0 g of propylene glycol, 12.0 g of glycerol, 0.2 g of triethanolamine, 0.1 g of TEGO Wet (from Evonik Industries AG, silicone surfactant), 0.1 g of ACTICIDE B20 (from Thor Japan, preservative), and 5.6 g of ethylene urea were blended, and after ethylene urea was dissolved, 2.6 g of propylene glycol and 1.1 g of SURFYNOL 420 (from Evonik Industries AG, acetylene surfactant) were blended (mixture A). Subsequently, 3.3 g of AUROREN (registered trademark) AE-301 (Nippon Paper Industries Co., Ltd., acid-modified polypropylene), 5.0 g of ion-exchange water, 2.9 g of AQUACER 515 (BYK-Chemie GmbH, high-density oxidized polyethylene wax emulsion), and 5.0 g of ion-exchange water were blended in this order (mixture B). An aqueous pigment ink was obtained by blending 40.3 g of the aqueous pigment dispersion 13M obtained in Example 3 with the mixture B, then blending the mixture A, and stirring the mixture after washing the vessel with 7.8 g of ion-exchange water.

(Example 12)

Two grams of ion-exchange water, 12.0 g of propylene glycol, 12.0 g of glycerol, 0.2 g of triethanolamine, 0.1 g of TEGO Wet 280 (from Evonik Industries AG, silicone surfactant), 0.1 g of ACTICIDE B20 (from Thor Japan, preservative), and 5.6 g of ethylene urea were blended, and after ethylene urea was dissolved, 11.6 g of propylene glycol and 1.0 g of SURFYNOL 420 (from Evonik Industries AG, acetylene surfactant) were blended (mixture A). Subsequently, 3.3 g of AUROREN (registered trademark) AE-301 (Nippon Paper Industries Co., Ltd., acid-modified polypropylene), 5.0 g of ion-exchange water, 2.9 g of AQUACER 515 (BYK-Chemie GmbH, high-density oxidized polyethylene wax emulsion), and 5.0 g of ion-exchange water were blended in this order (mixture B). An aqueous pigment ink was obtained by blending 22 g of the aqueous pigment dispersion 14Y obtained in Example 4 with the mixture B, then blending the mixture A, and stirring the mixture after washing the vessel with 17.2 g of ion-exchange water.

(Example 13)

Two grams of ion-exchange water, 12.0 g of propylene glycol, 12.0 g of glycerol, 0.2 g of triethanolamine, 0.1 g of TEGO Wet (from Evonik Industries AG, silicone surfactant), 0.1 g of ACTICIDE B20 (from Thor Japan, preservative), and 5.6 g of ethylene urea were blended, and after ethylene urea was dissolved, 1.2 g of propylene glycol and 1.0 g of SURFYNOL 420 (from Evonik Industries AG, acetylene surfactant) were blended (mixture A). Subsequently, 3.3 g of AUROREN (registered trademark) AE-301 (Nippon Paper Industries Co., Ltd., acid-modified polypropylene), 5.0 g of ion-exchange water, 2.9 g of AQUACER 515 (BYK-Chemie GmbH, high-density oxidized polyethylene wax emulsion), and 5.0 g of ion-exchange water were blended in this order (mixture B). An aqueous pigment ink was obtained by blending 41.1 g of the aqueous pigment dispersion 15K obtained in Example 5 with the mixture B, then blending the

mixture A, and stirring the mixture after washing the vessel with 8.5 g of ion-exchange water.

(Example 14)

Two grams of ion-exchange water, 12.0 g of propylene glycol, 12.0 g of glycerol, 0.2 g of triethanolamine, 0.1 g of TEGO Wet 280 (from Evonik Industries AG, silicone surfactant), 0.1 g of ACTICIDE B20 (from Thor Japan, preservative), and 5.6 g of ethylene urea were blended, and after ethylene urea was dissolved, 9.1 g of propylene glycol and 1.0 g of SURFYNOL 420 (from Evonik Industries AG, acetylene surfactant) were blended (mixture A). Subsequently, 3.3 g of AUROREN (registered trademark) AE-301 (Nippon Paper Industries Co., Ltd., acid-modified polypropylene), 5.0 g of ion-exchange water, 2.9 g of AQUACER 515 (BYK-Chemie GmbH, high-density oxidized polyethylene wax emulsion), and 5.0 g of ion-exchange water were blended in this order (mixture B). An aqueous pigment ink was obtained by blending 29.1 g of the aqueous pigment dispersion 16C obtained in Example 6 with the mixture B, then blending the mixture A, and stirring the mixture after washing the vessel with 12.6 g of ion-exchange water.

(Example 15)

Two grams of ion-exchange water, 12.0 g of propylene glycol, 12.0 g of glycerol, 0.2 g of triethanolamine, 0.1 g of TEGO Wet 280 (from Evonik Industries AG, silicone surfactant), 0.1 g of ACTICIDE B20 (from Thor Japan, preservative), and 5.6 g of ethylene urea were blended, and after ethylene urea was dissolved, 2.6 g of propylene glycol and 1.1 g of SURFYNOL 420 (from Evonik Industries AG, acetylene surfactant) were blended (mixture A). Subsequently, 3.3 g of AUROREN (registered trademark) AE-301 (Nippon Paper Industries Co., Ltd., acid-modified polypropylene), 5.0 g of ion-exchange water, 2.9 g of AQUACER 515 (BYK-Chemie GmbH, high-density oxidized polyethylene wax emulsion), and 5.0 g of ion-exchange water were blended in this order (mixture B). An aqueous pigment ink was obtained by blending 40.9 g of the aqueous pigment dispersion 17M obtained in Example 7 with the mixture B, then blending the mixture A, and stirring the mixture after washing the vessel with 7.2 g of ion-exchange water.

(Example 16)

Two grams of ion-exchange water, 12.0 g of propylene glycol, 12.0 g of glycerol, 0.2 g of triethanolamine, 0.1 g of TEGO Wet 280 (from Evonik Industries AG, silicone surfactant), 0.1 g of ACTICIDE B20 (from Thor Japan, preservative), and 5.6 g of ethylene urea were blended, and after ethylene urea was dissolved, 11.6 g of propylene glycol and 1.0 g of SURFYNOL 420 (from Evonik Industries AG, acetylene surfactant) were blended (mixture A). Subsequently, 3.3 g of AUROREN (registered trademark) AE-301 (Nippon Paper Industries Co., Ltd., acid-modified polypropylene), 5.0 g of ion-exchange water, 2.9 g of AQUACER 515 (BYK-Chemie GmbH, high-density oxidized polyethylene wax emulsion), and 5.0 g of ion-exchange water were blended in this order (mixture B). An aqueous pigment ink was obtained by blending 22.3 g of the aqueous pigment dispersion 18Y obtained in Example 8 with the mixture B, then blending the mixture A, and stirring the mixture after washing the vessel with 16.9 g of ion-exchange water.

(Comparative Example 9)

Two grams of ion-exchange water, 12.0 g of propylene glycol, 12.0 g of glycerol, 0.2 g of triethanolamine, 0.1 g of TEGO Wet 280 (from Evonik Industries AG, silicone surfactant), 0.1 g of ACTICIDE B20 (from Thor Japan, preservative), and 5.6 g of ethylene urea were blended, and after ethylene urea was dissolved, 1.2 g of propylene glycol and 1.0 g of SURFYNOL 420 (from Evonik Industries AG, acetylene surfactant) were blended (mixture A). Subsequently, 3.3 g of AUROREN (registered trademark) AE-301 (Nippon Paper Industries Co., Ltd., acid-modified polypropylene), 5.0 g of ion-exchange water, 2.9 g of AQUACER 515 (BYK-Chemie GmbH, high-density oxidized polyethylene wax emulsion), and 5.0 g of ion-exchange water were blended in this order (mixture B). An aqueous pigment ink was obtained by blending 28.0 g of the aqueous pigment dispersion 1K obtained in Comparative Example 1 with the mixture B, then blending the mixture A, and stirring the mixture after washing the vessel with 21.6 g of ion-exchange water.

(Comparative Example 10)

Two grams of ion-exchange water, 12.0 g of propylene glycol, 12.0 g of glycerol, 0.2 g of triethanolamine, 0.1 g of TEGO Wet 280 (from Evonik Industries AG, silicone surfactant), 0.1 g of ACTICIDE B20 (from Thor Japan, preservative), and 5.6 g of ethylene urea were blended, and after ethylene urea was dissolved, 9.1 g of propylene glycol and 1.0 g of SURFYNOL 420 (from Evonik Industries AG, acetylene surfactant) were blended (mixture A). Subsequently, 3.3 g of AUROREN (registered trademark) AE-301 (Nippon Paper Industries Co., Ltd., acid-modified polypropylene), 5.0 g of ion-exchange water, 2.9 g of AQUACER 515 (BYK-Chemie GmbH, high-density oxidized polyethylene wax

emulsion), and 5.0 g of ion-exchange water were blended in this order (mixture B). An aqueous pigment ink was obtained by blending 21.5 g of the aqueous pigment dispersion 2C obtained in Comparative Example 2 with the mixture B, then blending the mixture A, and stirring the mixture after washing the vessel with 20.2 g of ion-exchange water.

(Comparative Example 11)

Two grams of ion-exchange water, 12.0 g of propylene glycol, 12.0 g of glycerol, 0.2 g of triethanolamine, 0.1 g of TEGO Wet 280 (from Evonik Industries AG, silicone surfactant), 0.1 g of ACTICIDE B20 (from Thor Japan, preservative), and 5.6 g of ethylene urea were blended, and after ethylene urea was dissolved, 2.6 g of propylene glycol and 1.1 g of SURFYNOL 420 (from Evonik Industries AG, acetylene surfactant) were blended (mixture A). Subsequently, 3.3 g of AUROREN (registered trademark) AE-301 (Nippon Paper Industries Co., Ltd., acid-modified polypropylene), 5.0 g of ion-exchange water, 2.9 g of AQUACER 515 (BYK-Chemie GmbH, high-density oxidized polyethylene wax emulsion), and 5.0 g of ion-exchange water were blended in this order (mixture B). An aqueous pigment ink was obtained by blending 30.0 g of the aqueous pigment dispersion 3M obtained in Comparative Example 3 with the mixture B, then blending the mixture A, and stirring the mixture after washing the vessel with 18.1 g of ion-exchange water.

(Comparative Example 12)

Two grams of ion-exchange water, 12.0 g of propylene glycol, 12.0 g of glycerol, 0.2 g of triethanolamine, 0.1 g of TEGO Wet 280 (from Evonik Industries AG, silicone surfactant), 0.1 g of ACTICIDE B20 (from Thor Japan, preservative), and 5.6 g of ethylene urea were blended, and after ethylene urea was dissolved, 11.6 g of propylene glycol and 1.0 g of SURFYNOL 420 (from Evonik Industries AG, acetylene surfactant) were blended (mixture A). Subsequently, 3.3 g of AUROREN (registered trademark) AE-301 (Nippon Paper Industries Co., Ltd., acid-modified polypropylene), 5.0 g of ion-exchange water, 2.9 g of AQUACER 515 (BYK-Chemie GmbH, high-density oxidized polyethylene wax emulsion), and 5.0 g of ion-exchange water were blended in this order (mixture B). An aqueous pigment ink was obtained by blending 16.5 g of the aqueous pigment dispersion 4Y obtained in Comparative Example 4 with the mixture B, then blending the mixture A, and stirring the mixture after washing the vessel with 22.7 g of ion-exchange water.

(Comparative Example 13)

Two grams of ion-exchange water, 12.0 g of propylene glycol, 12.0 g of glycerol, 0.2 g of triethanolamine, 0.1 g of TEGO Wet 280 (from Evonik Industries AG, silicone surfactant), 0.1 g of ACTICIDE B20 (from Thor Japan, preservative), and 5.6 g of ethylene urea were blended, and after ethylene urea was dissolved, 1.2 g of propylene glycol and 1.0 g of SURFYNOL 420 (from Evonik Industries AG, acetylene surfactant) were blended (mixture A). Subsequently, 3.3 g of AUROREN (registered trademark) AE-301 (Nippon Paper Industries Co., Ltd., acid-modified polypropylene), 5.0 g of ion-exchange water, 2.9 g of AQUACER 515 (BYK-Chemie GmbH, high-density oxidized polyethylene wax emulsion), and 5.0 g of ion-exchange water were blended in this order (mixture B). An aqueous pigment ink was obtained by blending 28.0 g of the aqueous pigment dispersion 5K obtained in Comparative Example 5 with the mixture B, then blending the mixture A, and stirring the mixture after washing the vessel with 21.6 g of ion-exchange water.

(Comparative Example 14)

Two grams of ion-exchange water, 12.0 g of propylene glycol, 12.0 g of glycerol, 0.2 g of triethanolamine, 0.1 g of TEGO Wet 280 (from Evonik Industries AG, silicone surfactant), 0.1 g of ACTICIDE B20 (from Thor Japan, preservative), and 5.6 g of ethylene urea were blended, and after ethylene urea was dissolved, 9.1 g of propylene glycol and 1.0 g of SURFYNOL 420 (from Evonik Industries AG, acetylene surfactant) were blended (mixture A). Subsequently, 3.3 g of AUROREN (registered trademark) AE-301 (Nippon Paper Industries Co., Ltd., acid-modified polypropylene), 5.0 g of ion-exchange water, 2.9 g of AQUACER 515 (BYK-Chemie GmbH, high-density oxidized polyethylene wax emulsion), and 5.0 g of ion-exchange water were blended in this order (mixture B). An aqueous pigment ink was obtained by blending 21.5 g of the aqueous pigment dispersion 6C obtained in Comparative Example 6 with the mixture B, then blending the mixture A, and stirring the mixture after washing the vessel with 20.2 g of ion-exchange water.

(Comparative Example 15)

Two grams of ion-exchange water, 12.0 g of propylene glycol, 12.0 g of glycerol, 0.2 g of triethanolamine, 0.1 g of TEGO Wet 280 (from Evonik Industries AG, silicone surfactant), 0.1 g of ACTICIDE B20 (from Thor Japan, preservative), and 5.6 g of ethylene urea were blended, and after ethylene urea was dissolved, 2.6 g of propylene glycol and 1.1 g of SURFYNOL 420 (from Evonik Industries AG, acetylene surfactant) were blended (mixture A). Subsequently,

3.3 g of AUROREN (registered trademark) AE-301 (Nippon Paper Industries Co., Ltd., acid-modified polypropylene), 5.0 g of ion-exchange water, 2.9 g of AQUACER 515 (BYK-Chemie GmbH, high-density oxidized polyethylene wax emulsion), and 5.0 g of ion-exchange water were blended in this order (mixture B). An aqueous pigment ink was obtained by blending 30.0 g of the aqueous pigment dispersion 7M obtained in Comparative Example 7 with the mixture B, then blending the mixture A, and stirring the mixture after washing the vessel with 18.1 g of ion-exchange water.

(Comparative Example 16)

Two grams of ion-exchange water, 12.0 g of propylene glycol, 12.0 g of glycerol, 0.2 g of triethanolamine, 0.1 g of TEGO Wet 280 (from Evonik Industries AG, silicone surfactant), 0.1 g of ACTICIDE B20 (from Thor Japan, preservative), and 5.6 g of ethylene urea were blended, and after ethylene urea was dissolved, 11.6 g of propylene glycol and 1.0 g of SURFYNOL 420 (from Evonik Industries AG, acetylene surfactant) were blended (mixture A). Subsequently, 3.3 g of AUROREN (registered trademark) AE-301 (Nippon Paper Industries Co., Ltd., acid-modified polypropylene), 5.0 g of ion-exchange water, 2.9 g of AQUACER 515 (BYK-Chemie GmbH, high-density oxidized polyethylene wax emulsion), and 5.0 g of ion-exchange water were blended in this order (mixture B). An aqueous pigment ink was obtained by blending 16.5 g of the aqueous pigment dispersion 8Y obtained in Comparative Example 8 with the mixture B, then blending the mixture A, and stirring the mixture after washing the vessel with 22.7 g of ion-exchange water.

(Example 17)

An aqueous pigment dispersion 21M (pigment concentration: 14.9% by mass) was obtained in the same way as in Example 3 except that 6.67 g of a cross-linking agent (product name: DENACOL EX-521, epoxy equivalent: 183, dissolution rate of 10 g of a cross-linking agent in 90 g of ion-exchange water is approximately 100% by mass (25°C), from Nagase ChemteX Corporation) was used instead of 6.12 g of the cross-linking agent (product name: DENACOL EX-512, epoxy equivalent: 168, dissolution rate of 10 g of a cross-linking agent in 90 g of ion-exchange water is approximately 100% by mass (25°C), from Nagase ChemteX Corporation).

An aqueous pigment ink with a non-volatile content of 6% by mass was obtained in the same way as in Example 11, except that 40.2 g of the aqueous pigment dispersion 21M was used instead of the aqueous pigment dispersion 13M.

(Example 18)

An aqueous pigment dispersion 22M (pigment concentration 15.0% by mass) was obtained in the same way as in Example 3, except that 5.14 g of a cross-linking agent (product name: DENACOL EX-313, epoxy equivalent: 144, dissolution rate of 10 g of a cross-linking agent in 90 g of ion-exchange water is approximately 90% by mass (25°C), from Nagase ChemteX Corporation) was used instead of 6.12 g of the cross-linking agent (product name: DENACOL EX-512, epoxy equivalent: 168, dissolution rate of 10 g of a cross-linking agent in 90 g of ion-exchange water is approximately 100% by mass (25°C), from Nagase ChemteX Corporation).

An aqueous pigment ink with a non-volatile content of 6.0% by mass was obtained in the same way as in Example 11, except that 40.1 g of the aqueous pigment dispersion 22M was used instead of the aqueous pigment dispersion 13M.

(Example 19)

An aqueous pigment dispersion 23M (pigment concentration: 15.0% by mass) was obtained in the same way as in Example 3, except that 4.45 g of a cross-linking agent (product name: DENACOL EX-850, epoxy equivalent: 122, dissolution rate of 10 g of a cross-linking agent in 90 g of ion-exchange water is approximately 100% by mass (25°C), from Nagase ChemteX Corporation) was used instead of 6.12 g of the cross-linking agent (product name: DENACOL EX-512, epoxy equivalent: 168, dissolution rate of 10 g of a cross-linking agent in 90 g of ion-exchange water is approximately 100% by mass (25°C), from Nagase ChemteX Corporation).

An aqueous pigment ink with a non-volatile content of 6.0% by mass was obtained in the same way as in Example 11, except that 40.1 g of the aqueous pigment dispersion 23M was used instead of the aqueous pigment dispersion 13M.

(Example 20)

An aqueous pigment dispersion 24M (pigment concentration: 15.0% by mass) was obtained in the same way as in Example 3, except that 5.47 g of a cross-linking agent (product name: DENACOL EX-851, epoxy equivalent: 150, dissolution rate of 10 g of a cross-linking agent in 90 g of ion-exchange water is approximately 99% by mass (25°C),

from Nagase ChemteX Corporation) was used instead of 6.12 g of the cross-linking agent (product name: DENACOL EX-512, epoxy equivalent: 168, dissolution rate of 10 g of a cross-linking agent in 90 g of ion-exchange water is approximately 100% by mass (25°C), from Nagase ChemteX Corporation).

An aqueous pigment ink with a non-volatile content of 6.0% by mass was obtained in the same way as in Example 11, except that 40.1 g of the aqueous pigment dispersion 24M was used instead of the aqueous pigment dispersion 13M.

(Example 21)

An aqueous pigment dispersion 25M (pigment concentration: 14.9% by mass) was obtained in the same way as in Example 3, except that 6.74 g of a cross-linking agent (product name: DENACOL EX-821, epoxy equivalent: 185, dissolution rate of 10 g of a cross-linking agent in 90 g of ion-exchange water is approximately 100% by mass (25°C), from Nagase ChemteX Corporation) was used instead of 6.12 g of the cross-linking agent (product name: DENACOL EX-512, epoxy equivalent: 168, dissolution rate of 10 g of a cross-linking agent in 90 g of ion-exchange water is approximately 100% by mass (25°C), from Nagase ChemteX Corporation).

An aqueous pigment ink with a non-volatile content of 6.0% by mass was obtained in the same way as in Example 11, except that 40.2 g of the aqueous pigment dispersion 25M was used instead of the aqueous pigment dispersion 13M.

(Example 22)

An aqueous pigment dispersion 26M (pigment concentration: 14.8% by mass) was obtained in the same way as in Example 3, except that 9.77 g of a cross-linking agent (product name: DENACOL EX-830, epoxy equivalent: 268, dissolution rate of 10 g of a cross-linking agent in 90 g of ion-exchange water is approximately 100% by mass (25°C), from Nagase ChemteX Corporation) was used instead of 6.12 g of the cross-linking agent (product name: DENACOL EX-512, epoxy equivalent: 168, dissolution rate of 10 g of a cross-linking agent in 90 g of ion-exchange water is approximately 100% by mass (25°C), from Nagase ChemteX Corporation).

An aqueous pigment ink with a non-volatile content of 6.0% by mass was obtained in the same way as in Example 11, except that 40.5 g of the aqueous pigment dispersion 26M was used instead of the aqueous pigment dispersion 13M.

(Example 23)

An aqueous pigment dispersion 27M (pigment concentration: 14.8% by mass) was obtained in the same way as in Example 3, except that 10.35 g of a cross-linking agent (product name: DENACOL EX-832, epoxy equivalent: 284, dissolution rate of 10 g of a cross-linking agent in 90 g of ion-exchange water is approximately 100% by mass (25°C), from Nagase ChemteX Corporation) was used instead of 6.12 g of the cross-linking agent (product name: DENACOL EX-512, epoxy equivalent: 168, dissolution rate of 10 g of a cross-linking agent in 90 g of ion-exchange water is approximately 100% by mass (25°C), from Nagase ChemteX Corporation).

An aqueous pigment ink with a non-volatile content of 6.0% by mass was obtained in the same way as in Example 11, except that 40.5 g of the aqueous pigment dispersion 27M was used instead of the aqueous pigment dispersion 13M.

(Example 24)

An aqueous pigment dispersion 28M (pigment concentration: 14.7% by mass) was obtained in the same way as in Example 3, except that 13.56 g of a cross-linking agent (product name: DENACOL EX-841, epoxy equivalent: 372, dissolution rate of 10 g of a cross-linking agent in 90 g of ion-exchange water is approximately 100% by mass (25°C), from Nagase ChemteX Corporation) was used instead of 6.12 g of the cross-linking agent (product name: DENACOL EX-512, epoxy equivalent: 168, dissolution rate of 10 g of a cross-linking agent in 90 g of ion-exchange water is approximately 100% by mass (25°C), from Nagase ChemteX Corporation).

An aqueous pigment ink with a non-volatile content of 6.0% by mass was obtained in the same way as in Example 11, except that 40.8 g of the aqueous pigment dispersion 28M was used instead of the aqueous pigment dispersion 13M.

(Example 25)

An aqueous pigment dispersion 29M (pigment concentration: 14.9% by mass) was obtained in the same way

as in Example 3, except that 6.49 g of a cross-linking agent (product name: DENACOL EX-920, epoxy equivalent: 178, dissolution rate of 10 g of a cross-linking agent in 90 g of ion-exchange water is approximately 100% by mass (25°C), from Nagase ChemteX Corporation) was used instead of 6.12 g of the cross-linking agent (product name: DENACOL EX-512, epoxy equivalent: 168, dissolution rate of 10 g of a cross-linking agent in 90 g of ion-exchange water is approximately 100% by mass (25°C), from Nagase ChemteX Corporation).

An aqueous pigment ink with a non-volatile content of 6.0% by mass was obtained in the same way as in Example 11, except that 40.2 g of the aqueous pigment dispersion 29M was used instead of the aqueous pigment dispersion 13M.

<Characteristics Evaluation>

The characteristics of the aqueous pigment dispersions and the aqueous pigment inks obtained in Examples and Comparative Examples were evaluated by the methods below.

[Storage Stability Evaluation]

Viscosity V0 of the aqueous pigment dispersions (25°C) and the aqueous pigment inks (32°C) immediately after production obtained in Examples and Comparative Examples was measured at the respective temperatures by the following method.

Subsequently, the aqueous pigment dispersions and the aqueous pigment inks were each charged into a plastic bottle and stored in a thermostatic bath at 60°C. One week after the start of storage, viscosity V1 of the aqueous pigment dispersions (25°C) and the aqueous pigment inks (32°C) was measured at the respective temperatures by the following method. Subsequently, two weeks after the start of storage, the viscosity V1 of the aqueous pigment dispersions (25°C) and the aqueous pigment inks (32°C) was measured at the respective temperatures by the following method.

Based on the viscosity V0 and the viscosity V1 and the formulas below, the rate of change in viscosity and the range of change in viscosity of the aqueous pigment dispersions and the aqueous pigment inks one week and two weeks after the start of storage were calculated, and the storage stability of the aqueous pigment dispersions and the aqueous pigment inks was evaluated based on the rate of change.

$$\text{Rate of change in viscosity} = [(\text{viscosity V1} - \text{viscosity V0}) / (\text{viscosity V0})] \times 100$$

$$\text{Range of change in viscosity} = \text{viscosity V1} - \text{viscosity V0}$$

Evaluation Criteria for Storage Stability of Aqueous Pigment Dispersions

3: The rates of change in viscosity of the aqueous pigment dispersion after one week of storage and after two weeks of storage were less than 10% and the ranges of change in viscosity were less than ±0.5 mPa·s.
2: The rate of change in viscosity of the aqueous pigment dispersion after one week of storage was less than 10% and the range of change in viscosity was ±0.5 mPa·s, whereas the rate of change in viscosity of the aqueous pigment dispersion after two weeks of storage was less than 10% or the range of change in viscosity was less than ±0.5 mPa·s.
1: The rate of change in viscosity of the aqueous pigment dispersion after one week of storage was 10% or more or the range of change in viscosity was ±0.5 mPa·s or more.

Evaluation Criteria for Storage Stability of Aqueous Pigment Inks

3: The viscosity of the aqueous pigment ink immediately after production was less than 10 MPa·s, and the rate of change in viscosity of the aqueous pigment ink after one week of storage was less than 10%, and the rate of change

in viscosity of the aqueous pigment ink after two weeks of storage was less than 10%.

2: The viscosity of the aqueous pigment ink immediately after production was less than 10 MPa·s, and the rate of change in viscosity of the aqueous pigment ink after one week of storage was less than 10%, and the rate of change in viscosity of the aqueous pigment ink after two weeks of storage was 10% or more.

1: The viscosity of the aqueous pigment ink immediately after production was less than 10 MPa·s, and the rate of change in viscosity of the aqueous pigment ink after one week of storage was 10% or more.

0: The viscosity of the aqueous pigment ink immediately after production was 10 MPa·s or more.

The viscosity of the aqueous pigment dispersions and the aqueous pigment inks was measured using a cone-and-plate rotational viscometer that is an E-type viscometer, under the following conditions.

Measuring device: TVE-25 viscometer (TVE-25 L available from Toki Sangyo Co., Ltd.)
Standard liquid for calibration: JS20
Measuring temperature: 32°C
Rotation speed: 10 to 100 rpm
Injection volume: 1200 μL

[Mottling Evaluation of Printed Material]

The aqueous pigment inks obtained in Examples and Comparative Examples were each charged in an inkjet head KJ4B-YH from KYOCERA Corporation, and 50% solid printing was performed on OK Top Coat+ (from Oji Paper Co., Ltd., basis weight: 104.7 g/$m^2$), which was a less-ink-absorbent recording medium. Subsequently, a printed material was obtained by heating and drying for 1 second with a 9-kW near-infrared heater at a position about 8 cm above the printed surface.

The printed surface of the printed material was numerically analyzed using an image quality analyzer "PIAS-II" from Quality Engineering Associates, Inc. Specifically, the mottle value (spots) of the printed surface of the printed material was measured for each color. The mottling suppressing characteristic was evaluated based on the mottle values of the printed surface for K (black), C (cyan), M (magenta), and Y (yellow) and the evaluation criteria listed in Table 1. Specifically, the ink rated 3 by the evaluation criteria can be evaluated as being capable of producing a printed material with mottling sufficiently suppressed. On the other hand, the ink rated 0 by the evaluation criteria was evaluated as being incapable of producing a printed material because it failed to be ejected from the inkjet head.

[Table 1]

| Evaluation criteria | K | C | M | Y |
|---|---|---|---|---|
| 3 | Less than 0.5 | Less than 0.4 | Less than 0.7 | Less than 0.6 |
| 2 | 0.5 or more and less than 0.8 | 0.4 or more and less than 0.6 | 0.7 or more and less than 1.0 | 0.6 or more and less than 0.8 |
| 1 | 0.8 or more | 0.6 or more | 1.0 or more | 0.8 or more |
| 0 | Unprintable | | | |

[Graininess Evaluation of Printed Material]

The aqueous pigment inks obtained in Examples and Comparative Examples were each charged in an inkjet head KJ4B-YH from KYOCERA Corporation, and 50% solid printing was performed on OK Top Coat+ (from Oji Paper Co., Ltd., basis weight: 104.7 g/$m^2$), which was a less-ink-absorbent recording medium. Subsequently, a printed material was obtained by heating and drying for 1 second with a 9-kW near-infrared heater at a position about 8 cm above the printed surface.

The printed surface of the printed material was numerically analyzed using an image quality analyzer "PIAS-II" from Quality Engineering Associates, Inc. Specifically, the graininess (the degree of graininess ) of the printed surface of the printed material was measured, and the graininess suppressing characteristic was evaluated based on the following criteria.

Evaluation Criteria

5: Graininess is less than 2.

4: Graininess is 2 or more and less than 3.

3: Graininess is 3 or more and less than 4.

2: Graininess is 4 or more and less than 5.

1: Graininess value is 5 or more.

0: Unprintable.

[Table 2]

| | Examp le 1 | Examp le 2 | Examp le 3 | Examp le 4 | Examp le 5 | Examp le 6 | Examp le 7 | Examp le 8 |
|---|---|---|---|---|---|---|---|---|
| Cross-linking ratio | 50% | 50% | 82% | 50% | 50% | 50% | 82% | 50% |
| [Compound (B2)/compo und (B1)] (mmol/g) | 0.9 | 0.9 | 1.5 | 0.9 | 1.4 | 1.4 | 2.2 | 1.4 |
| [(Anionic group/pigment dispersing resin (B)] (mmol/g) | 0.8 | 0.8 | 0.3 | 0.8 | 1.1 | 1.1 | 0.3 | 1.1 |
| Storage stability | 3 | 3 | 3 | 3 | 3 | 3 | 3 | 3 |

[Table 3]

| | Comp. Examp le 1 | Comp. Examp le 2 | Comp. Examp le 3 | Comp. Examp le 4 | Comp. Examp le 5 | Comp. Examp le 6 | Comp. Examp le 7 | Comp. Examp le 8 |
|---|---|---|---|---|---|---|---|---|
| Cross-linking ratio | 0% | 0% | 0% | 0% | 0% | 0% | 0% | 0% |
| [Compound (B2)/ compo und (B1)] (mmol/g) | 0.0 | 0.0 | 0.0 | 0.0 | 0.0 | 0.0 | 0.0 | 0.0 |
| [(Anionic group/ pigment dispersing resin (B)] (mmol/g) | 1.5 | 1.5 | 1.5 | 1.5 | 2.2 | 2.2 | 2.2 | 2.2 |
| Storage stability of aqueous pigment dispersion | 1 | 3 | 0 | 1 | 3 | 3 | 1 | 2 |

[Table 4]

| | Examp le 9 | Examp le 10 | Examp le 11 | Examp le 12 | Examp le 13 | Examp le 14 | Examp le 15 | Examp le 16 |
|---|---|---|---|---|---|---|---|---|
| Cross-linking ratio | 50% | 50% | 82% | 50% | 50% | 50% | 82% | 50% |

(continued)

| | Examp le 9 | Examp le 10 | Examp le 11 | Examp le 12 | Examp le 13 | Examp le 14 | Examp le 15 | Examp le 16 |
|---|---|---|---|---|---|---|---|---|
| [Compound (B2)/ compo und (B1)] (mmol/g) | 0.9 | 0.9 | 1.5 | 0.9 | 1.4 | 1.4 | 2.2 | 1.4 |
| [(Anionic group/ pigment | 0.8 | 0.8 | 0.3 | 0.8 | 1.1 | 1.1 | 0.3 | 1.1 |
| dispersing resin (B)] (mmol/g) | | | | | | | | |
| Storage stability of aqueous pigment ink | 3 | 3 | 3 | 3 | 3 | 3 | 3 | 3 |
| Mottling | 3 | 3 | 3 | 3 | 3 | 3 | 3 | 3 |
| Graininess | 5 | 5 | 3 | 5 | 5 | 5 | 4 | 5 |

[Table 5]

| | Comp. Examp le 9 | Comp. Example 10 | Comp. Example 11 | Comp. Example 12 | Comp. Example 13 | Comp. Example 14 | Comp. Example 15 | Comp. Example 16 |
|---|---|---|---|---|---|---|---|---|
| Cross-linking ratio | 0% | 0% | 0% | 0% | 0% | 0% | 0% | 0% |
| [Compound (B2)/ compo und (B1)] (mmol/g) | 0.0 | 0.0 | 0.0 | 0.0 | 0.0 | 0.0 | 0.0 | 0.0 |
| [(Anionic group/ pigment dispersing resin (B)] (mmol/g) | 1.5 | 1.5 | 1.5 | 1.5 | 2.2 | 2.2 | 2.2 | 2.2 |
| Storage stability of aqueous pigment ink | 3 | 3 | 1 | 2 | 1 | 3 | 0 | 2 |
| Mottling | 1 | 1 | 1 | 1 | 0 | 3 | 0 | 0 |
| Graininess | 3 | 4 | 2 | 4 | 0 | 5 | 0 | 0 |

[Table 6]

| | Example 17 | Example 18 | Example 19 | Example 20 | Example 21 |
|---|---|---|---|---|---|
| Cross-linking ratio | 82% | 82% | 82% | 82% | 82% |
| [Compound (B2)/compound (B1)] (mmol/g) | 1.5 | 1.5 | 1.5 | 1.5 | 1.5 |
| [Anionic group/pigment dispersing resin (B)] (mmol/g) | 0.3 | 0.3 | 0.3 | 0.3 | 0.3 |
| Storage stability of aqueous pigment dispersion | 3 | 3 | 3 | 3 | 3 |
| Storage stability of aqueous pigment ink | 3 | 3 | 3 | 3 | 3 |
| Mottling | 3 | 3 | 3 | 3 | 3 |

(continued)

| | Example 17 | Example 18 | Example 19 | Example 20 | Example 21 |
|---|---|---|---|---|---|
| Graininess | 3 | 3 | 3 | 3 | 3 |

[Table 7]

| | Example 22 | Example 23 | Example 24 | Example 25 |
|---|---|---|---|---|
| Cross-linking ratio | 82% | 82% | 82% | 82% |
| [Compound (B2)/compound (B1)] (mmol/g) | 1.5 | 1.5 | 1.5 | 1.5 |
| [Anionic group/pigment dispersing resin (B)] (mmol/g) | 0.2 | 0.2 | 0.2 | 0.3 |
| Storage stability of aqueous pigment dispersion | 3 | 3 | 3 | 3 |
| Storage stability of aqueous pigment ink | 3 | 3 | 3 | 3 |
| Mottling | 3 | 3 | 3 | 3 |
| Graininess | 3 | 3 | 3 | 3 |

**Claims**

1. An aqueous pigment dispersion comprising:

   a pigment (A);
   a pigment dispersing resin (B) having a structure (X) represented by general formula (I) below and an anionic group; and
   an aqueous medium (C), wherein
   the pigment dispersing resin (B) contains 0.2 to 1.5 mmol/g of the anionic group in a total amount of the pigment dispersing resin (B)

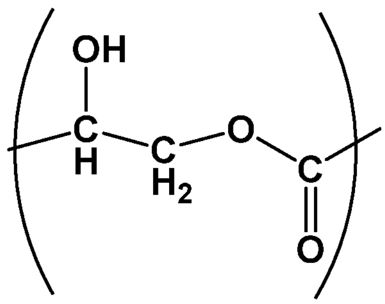

(I)

.

2. The aqueous pigment dispersion according to claim 1, wherein the structure (X) is a structure formed by a reaction of a carboxyl group and an epoxy group.

3. The aqueous pigment dispersion according to claim 1, wherein the pigment dispersing resin (B) is a reaction product of a compound (B1) having an anionic group and a compound (B2) having two or more epoxy groups.

4. The aqueous pigment dispersion according to claim 3, wherein the compound (B2) is used in a range of 3.2 mmol/g or less in a total amount of the compound (B1).

5. The aqueous pigment dispersion according to claim 3 or 4, wherein the compound (B2) has an epoxy group and an oxyethylene structure.

6. The aqueous pigment dispersion according to any one of claims 3 to 5, wherein the compound (B1) has an acid value of 250 mg KOH/g or less.

7. An inkjet ink comprising the aqueous pigment dispersion according to any one of claims 1 to 6.

8. A method for producing a printed material, the method comprising performing printing on a recording medium by an inkjet printing method using the inkjet ink according to claim 7.

**INTERNATIONAL SEARCH REPORT**

International application No.
**PCT/JP2022/013798**

**A. CLASSIFICATION OF SUBJECT MATTER**

***C09D 17/00***(2006.01)i; ***B41J 2/01***(2006.01)i; ***C09D 11/326***(2014.01)i; ***B41M 5/00***(2006.01)i
FI: C09D17/00; C09D11/326; B41M5/00 120; B41J2/01 501

According to International Patent Classification (IPC) or to both national classification and IPC

**B. FIELDS SEARCHED**

Minimum documentation searched (classification system followed by classification symbols)

C09D17/00; B41J2/01; C09D11/326; B41M5/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2011-178895 A (FUJIFILM CORP) 15 September 2011 (2011-09-15) claims, examples, paragraphs [0002], [0255]-[0269], table 3 | 1-8 |
| X | JP 2009-108116 A (KAO CORP) 21 May 2009 (2009-05-21) claims, paragraphs [0043]-[0048], table 2 | 1-8 |
| X | JP 2019-26846 A (KAO CORP) 21 February 2019 (2019-02-21) claims, paragraphs [0062]-[0073], table 2 | 1-8 |
| X | JP 2019-14883 A (KAO CORP) 31 January 2019 (2019-01-31) claims, paragraphs [0058]-[0082] | 1-8 |
| A | JP 2019-14879 A (KAO CORP) 31 January 2019 (2019-01-31) entire text | 1-8 |
| A | JP 2011-137102 A (KAO CORP) 14 July 2011 (2011-07-14) entire text | 1-8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 June 2022** | **14 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/013798**

| Patent document cited in search report | Publication date (day/month/year) | Patent family member(s) | Publication date (day/month/year) |
|---|---|---|---|
| JP 2011-178895 A | 15 September 2011 | (Family: none) | |
| JP 2009-108116 A | 21 May 2009 | (Family: none) | |
| JP 2019-26846 A | 21 February 2019 | US 2020/0156396 A1<br>claims, paragraphs [0157]-[0169]<br>WO 2019/026804 A1<br>EP 3663369 A1<br>CN 110959028 A | |
| JP 2019-14883 A | 31 January 2019 | US 2020/0131389 A1<br>claims, paragraphs [0164]-[0188]<br>WO 2019/009210 A1<br>EP 3650509 A1<br>CN 110799605 A | |
| JP 2019-14879 A | 31 January 2019 | US 2020/0216580 A1<br>WO 2019/009170 A1<br>EP 3650510 A1<br>CN 110832042 A | |
| JP 2011-137102 A | 14 July 2011 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011137102 A
- WO 2018190139 A